# EUROPÄISCHE PATENTSCHRIFT

(11) **EP 0 990 493 B1**
(45) Veröffentlichungstag und Bekanntmachung des Hinweises auf die Patenterteilung: **26.10.2005**
(21) Anmeldenummer: 99117007.7
(22) Anmeldetag: 28.08.1999
(51) Int. Cl.: B27K 3/15

(54) **Verfahren zur Herstellung von Holz-Kunststoffkombinationen mittels Hochleistungselektronenbeschleuniger**
Process for production of wood-plastic combinations by high energy electron accelerator
Procèdè pour la production des combinations plastic-bois par un accélérateur d'électrons de haute énérgie

(30) Priorität: 09.09.1998 DE 19841145
(43) Veröffentlichungstag der Anmeldung: 05.04.2000
(73) Patentinhaber: Para-Chemie GmbH, 2440 Gramatneusiedl (AT); Katzbeck GmbH, 7571 Rudersdorf (AT)
(72) Erfinder: Gütlbauer, Franz, Dr., 2500 Baden (AT); Strejcek, Ivan, 2700 Wiener Neustadt (AT); Schöla, Egbert, Dr., 7052 Müllendorf (AT); Getoff, Nikola, Prof. Dr., 1120 Wien (AT); Schaudy, Rudolf, Dr., 2500 Baden (AT); Grienauer, Walter, 1120 Wien (AT)
(74) Vertreter: Luderschmidt, Schüler & Partner GbR

(56) Entgegenhaltungen:
- FR-A- 2 043 815
- FR-A- 2 095 084
- GB-A- 1 178 215
- US-A- 3 909 379

## Beschreibung

Die Erfindung betrifft das Gebiet der Holz-Kunststoffkombinationen. Insbesondere bezieht sich die Erfindung auf Verfahren zur Herstellung von Holz-Kunststoffkombinationen, bei denen Hochleistungselektronenbeschleuniger zur Härtung von mit polymerisierbaren Bestandteilen imprägnierten Holzwerkstoffen eingesetzt werden.

Holz-Kunststoffkombinationen gehören zum Stand der Technik. Zur Verbesserung der Werkstoffeigenschaften des Holzes kann man geeignete Hölzer mit Monomeren, wie z. B. Methylmethacrylat, Vinylacetat, Styrol und dgl., durchtränken und diese durch Erwärmen, Zusatz von Initiatoren oder vornehmlich durch energiereiche Strahlung zur Polymerisation und zum Aushärten bringen. Als Verbundwerkstoffe sind Holz-Kunststoffkombinationen besonders hart und besitzen darüber hinaus größere Abrieb- und Druckfestigkeit sowie geringere Feuchtigkeitsempfindlichkeit als Holz.

So ist im einzelnen aus Österreichische Chemiker-Zeitung 67, Seite 350 ff (1966) die Strahlungshärtung von Holz-Kunststoffkombinationen bekannt, wobei als Monomere besonders VC, MMA, VA und Styrolacrylnitril hervorgehoben werden. Das Holz wird durchtränkt und das Imprägniermittel beispielsweise strahlungschemisch polymerisiert. Auch die thermische Härtung ist bekannt. Obwohl eine ganze Reihe von Eigenschaften positiv durch die Polymerbeladung des Holzes verbessert wird, hierzu gehören beispielsweise Abriebfestigkeit, Biegefestigkeit, Abscherfestigkeit, Druckfestigkeit, Zähigkeit, Aussehen und ästhetische Qualitäten, geringere Wasserabsorption sowie Beständigkeit gegenüber Mikroorganismen, werden bei einer Initiierung durch γ-Strahlen sehr lange Polymerisationszeiten in der Größenordnung von Stunden zur Härtung benötigt.

Im thermischen Prozeß muß die Reaktion bei erhöhter Temperatur gestartet werden. Zur Prozeßkontrolle ist es hingegen notwendig, die bei der Polymerisation entstehende Wärme abzuführen. Neben einer schwer handhabbaren Prozeßkontrolle kann dieses Problem zu Rißbildung und Materialverwerfungen führen.

Ein Verfahren zur Herstellung von Holz-Kunststoffkombinationen, bei dem man die Imprägniermischung thermisch härtet, wird beispielsweise in der Patentschrift DD-66 017 beschrieben. Es hat sich jedoch gezeigt, daß bei der hier gewählten Temperatur der Umsatz der Monomere unbefriedigend ist. Ein hoher Anteil der eingesetzten Monomere wird nicht polymerisiert, so daß diese nach und nach aus dem Holz freigesetzt werden. Dies führt nicht nur zu Geruchsbelästigung sondern ist auch gesundheitsschädlich. Darüber hinaus sind die erzielbaren Molekulargewichte durch Abbruchsreaktionen relativ gering. Dementsprechend sind die mechanischen Eigenschaften so hergestellter Holz-Kunststoffkombinationen nicht optimal.

Es gibt nur wenige Arbeiten, bei denen Elektronenstrahlen zur Polymerholzherstellung eingesetzt wurden, obwohl hierbei die Polymerisationszeiten mit Minuten bzw. Bruchteilen davon für eine kontinuierliche und damit wirtschaftliche Produktion äußerst attraktiv wären. Insbesondere gilt dies für die viel untersuchte und interessante Kombination Holz-PMMA, nicht zuletzt weil sich Methylmethacrylat mit Elektronenstrahlen hoher Leistung nur schwer polymerisieren läßt (T. Handa et al., Polym.Sci.Technol. (1983) 20, 167).

Dies gilt vor allem, weil neben der erwünschten strahleninduzierten Polymerisation im MMA-System auch Depolymerisationsprozesse auftreten, die zur Folge haben können, daß im Endprodukt ein hoher Gehalt an niedermolekularen Stoffen festgestellt wird.

So beschriebt beispielsweise die schweizerische Patentschrift CH-528 957, daß bei der Polymerisation von Methylmethacrylat durch eine Strahlendosis von 15 Megarad (150 kGy) nur ein Umsatz von 15% erreicht wird. Als Lösung schlägt diese Druckschrift die Verwendung von Mischungen aus Vinylestern vor. Diese sind jedoch aufwendig in der Herstellung und somit teuer.

Des weiteren beschreibt die Offenlegungsschrift DE-A-24 40 139 ein Verfahren zur Herstellung von kunststoffimprägnierten Holzspanplatten oder Holzfaserplatten. Offenbart werden Mischungen, die Acrylnitril und Oligomere aufweisen, die Doppelbindungen enthalten. Nachteilig ist an diesen Systemen die hohe Viskosität, wobei dargelegt wird, daß reine Monomersysteme schlecht elektronenstrahlhärtbar sind. Aufgrund der hohen Viskosität kann die beschriebene Imprägniermischung nur für Faserplatten, jedoch nicht für Vollholzproben verwendet werden, wobei die Beladung in jedem Fall sehr verzögert wird.

Angesichts des Standes der Technik ist es nun Aufgabe der Erfindung, ein Verfahren zur Herstellung von Holz-Kunststoffkombinationen zur Verfügung zu stellen, bei dem hohe Umsatzraten der Imprägniermischung innerhalb kurzer Zeit erzielt werden können.

Des weiteren ist Aufgabe der Erfindung, ein Verfahren zur Herstellung von Holz-Kunststoffkombinationen anzugeben, die geruchsfrei, witterungsbeständig und spannungsrißfrei sind.

Weiterhin sollte das Verfahren der eingangs erwähnten Art in einem kontinuierlichen Prozeß durchführbar sein.

Darüber hinaus sollten die in dem Verfahren einsetzbaren Monomere einfach zugänglich bzw. preisgünstig kommerziell erhältlich sein.

Gelöst werden diese sowie weitere nicht explizit genannte Aufgaben, die jedoch aus den hierin diskutierten Zusammenhängen ohne weiteres ableitbar oder erschließbar sind, durch ein in Anspruch 1 beschriebenes Verfahren. Zweckmäßige Abwandlungen des erfindungsgemäßen Verfahrens werden in den auf Anspruch 1 rückbezogenen Unteransprüchen unter Schutz gestellt.

Dadurch, daß man als Imprägniermischung ein (Meth)acrylathaltiges Harz mit der Zusammensetzung

| | |
|---|---|
| (Meth)acrylat (A) | 50 - 100 Gew.-%, |
| Comonomere (B) | 0 - 50 Gew.-%, |
| in (A) oder (B) lösliche Polymere (C) | 0 - 50 Gew.-% |
| und bezogen auf 100 Teile der oben genannten Komponenten Radikalbildner und/oder Antioxidantien | 0,001 - 5 Gew.-Teile |
| sowie weitere übliche Verarbeitungshilfsmittel | 0 - 20 Gew.-Teile |

einsetzt und man das bestrahlte Holz oder den bestrahlten Holzwerkstoff für Zeiten im Bereich von 5 Stunden bis 10 Tagen bei Temperaturen im Bereich von 20 °C und 80 °C nachlagert,
wobei das beladene und bestrahlte Holz oder der beladene und bestrahlte Holzwerkstoff während der Nachlagerung durch Verdampfen weniger als 20 Gew.-% der Monomere verliert, bezogen auf die Monomere der Imprägniermischung, die nach dem Bestrahlen vorhanden sind, gelingt es auf nicht vorhersehbare Weise, ein Verfahren zur Herstellung einer Holz-Kunststoffkombination zur Verfügung zu stellen, bei dem Holz oder ein Holz enthaltender Werkstoff mit einer polymerisierbare Bestandteile enthaltenden Imprägniermischung zur Benetzung wenigstens eines Teils des Holzes oder Holzwerkstoffs in Kontakt gebracht wird, wobei das Holz oder der Holzwerkstoff mit der Imprägniermischung beladen wird, und man anschließend die Polymerisation (Härtung) der Imprägniermischung in Gegenwart von Radikalbildnern und/oder Antioxidantien durch Bestrahlung mit Elektronenstrahlen mit einer Energie im Bereich von 0,2 MeV bis 15 MeV bewirkt, so daß die Imprägniermischung innerhalb einer relativ kurzen Zeit zu einem sehr hohen Umsatz härtet. Daher kann dieses Verfahren in einem kontinuierlichen Prozeß zur Herstellung von Holz-Kunststoffkombinationen eingesetzt werden.

Besonders überraschend ist, daß durch das beschriebene Verfahren auch Imprägniermischungen verwendet werden können, die sich durch einen hohen Anteil an (Meth)acrylaten auszeichnen. Dies ist insbesondere deshalb erstaunlich, weil von PMMA bekannt ist, daß dieses Polymer durch Bestrahlung depolymerisiert. (Meth)acrylate sind im allgemeinen leicht herstellbar und sind vielfach kommerziell erhältlich.

Zugleich lassen sich Holz-Kunststoffkombinationen herstellen, die überaus positive Eigenschaften zeigen. Hierzu gehören u. a.:
- geringe Wasseraufnahme,
- hohe Härte,
- weitestgehende Geruchsfreiheit,
- große Druck- und Abriebfestigkeit,
- hohe Beständigkeit gegen Witterungseinflüsse und Mikroorganismen.

Unter "Holz-Kunststoffkombinationen" wird dabei im Rahmen der Erfindung ein mit einem Polymerisat auf Basis eines vinylisch ungesättigten Monomeren beladenes und ausgehärtetes Holz oder beladener und ausgehärteter holzenthaltender Werkstoff verstanden.

Holz oder Holzwerkstoff bezeichnet hierin jeglichen Werkstoff, der Holz aufweist. Hierzu gehören beispielsweise Vollholz, wie Nadelhölzer, z.B. Fichte und Kiefer, oder Laubhölzer, z.B. Rotbuche und Birke, sowie Spanplatten, Faserplatten, Furniere und Sägemehl.

Der Feuchtegehalt des Ausgangsmaterial beträgt üblicherweise 5 bis 20%. Je nach Holzart und Verfahrensbedingungen kann er bei Bedarf mit Wasser oder Wasserdampf erhöht oder durch Trocknung erniedrigt werden. Vorzugsweise entspricht der Feuchtegehalt jedoch der Gleichgewichtsfeuchte des Ausgangsmaterials bei Umgebungstemperatur.

Die zur Imprägnierung des Holzes oder des Holzwerkstoffs eingesetzten Substanzen sind im Rahmen der Erfindung üblicherweise polymerisierbare Flüssigkeiten. Sie enthalten ethylenisch ungesättigte Monomere sowie Radikalbildner und/oder Antioxidantien.

Mindestens 50 Gew.-% dieser Monomere sind (Meth)acrylate, wobei im Rahmen der Erfindung "(Meth)acrylat" für Acrylat und/oder Methacrylat steht. In bevorzugten Verfahren werden Imprägniermischungen eingesetzt, die mindestens 70 Gew.-%, insbesondere 80 Gew.-% (Meth)acrylate enthalten, wobei sich dieser Wert auf die Monomeren einschließlich ggf. einsetzbarer Polymere bezieht.

Die (Meth)acrylate können eine oder mehrere Doppelbindungen aufweisen. (Meth)acrylate, die zwei oder mehr reaktive Doppelbindungen aufweisen, werden im Rahmen der Erfindung als mehrwertige (Meth)acrylate bezeichnet.

Der Alkoholrest kann Heteroatome enthalten, beispielsweise in Form von Ether-, Alkohol-, Carbonsäure-, Ester- und Urethangruppen.

Zu im Rahmen der Erfindung mit besonderem Erfolg einsetzbaren (Meth)acrylaten gehören u. a.

Alkyl(meth)acrylate, die sich von gesättigten Alkoholen ableiten, wie Methyl(meth)acrylat, Ethyl(meth)acrylat, Isopropyl(meth)acrylat, n-Propyl(meth)acrylat, Buthyl(meth)-acrylat, Pentyl(meth)acrylat, n-Hexyl(meth)acrylat, n-Octyl(meth)acrylat, n-Decyl(meth)acrylat, Isooctyl(meth)-acrylat, Tetradecyl(meth)acrylat usw.;
Alkyl(meth)acrylate, die sich von ungesättigten Alkoholen ableiten, wie z. B. Oleyl(meth)acrylat, Allyl(meth)acrylat, Vinyl(meth)acrylat usw.;
(Meth)acrylate, die Heteroatome oder Aromaten aufweisen, wie 2-Hydroxyethylacrylat, 2-Hydroxyethyl(meth)acrylat, 2- oder 3-Hydroxypropylacrylat, 2- oder 3-Hydroxypropyl-(meth)acrylat, 6-Hydroxyhexylacrylat, 6-Hydroxyhexyl(meth)-acrylat, Benzyl(meth)acrylat, Phenylethyl(meth)acrylat, 2-Phenoxyethyl(meth)acrylat, Morpholinoethyl(meth)acrylat, Dimethylaminoethyl(meth)acrylat, Glycidyl(meth)acrylat, Piperidylacrylamid; Neopentyl(meth)acrylat, Isobornyl(meth)-acrylat, Cyclohexyl(meth)acrylat, und mehrwertige (Meth)-acrylate, wie Di(meth)acrylat des Propandiols, Butandiols, Hexandiols, Octandiols, Nonandiols, Decandiols, Eicosandiols, Ethylenglycols, Diethylenglycols, Triethylenglycols und Tetraethylenglycols, Bisphenol-A-dimethacrylat, Neopentylglycoldi(meth)acrylat, oder Trimethylolpropantri(meth)acrylat und Pentaerythritoltetra(meth)acrylat.

Die (Meth)acrylate können einzeln oder als Mischung von zwei oder mehr (Meth)acrylaten eingesetzt werden. Bevorzugtes (Meth)acrylat ist Methylmethacrylat.

Der Komponente A) können des weiteren auch andere Comonomere (Komponente B)) zugesetzt werden, die mit oben genannten (Meth)acrylaten identisch sein können und copolymerisierbar sein müssen. Zu diesen gehören u.a. Acrylnitril, Vinylester, Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien, Divinylbenzol, Diallylphthalat und 1,4-Butandioldivinylether. Als Vernetzer wirkende Substanzen wie Divinylbenzol, Triallylcyanurat, Allylmethacrylat, (Meth)acrylsäureester von Glycolen und Polyalkoholen sowie α-(Hydroxymethyl) acrylate können ebenfalls anwesend sein.

Die genannten Imprägniermischungen können vorzugsweise auch Polymere gelöst enthalten. Diese sind Polymerisate oder Mischpolymerisate der o.g. monomeren Bestandteile.

Es ist auch möglich von einem in an sich bekannter Weise durch partielle Polymerisation hergestellten, ggf. sirupösen Vorpolymerisat auszugehen. Die Herstellung solcher Vorpolymerisate wird beispielsweise in der DE-AS-1083075 und in der französischen Patentschrift FR 1221537 beschrieben.

Die Imprägniermischungen können außerdem weitere an sich bekannte Zusätze wie Antistatika, Antioxidantien, Entformungsmittel, Flammschutzmittel, Schmiermittel, Farbstoffe, Fließverbesserungsmittel, Lichtstabilisatoren, organische Phosphorverbindungen, Pigmente, Verwitterungsschutzmittel und Weichmacher enthalten.

Zu den als Radikalbildner einsetzbaren Verbindungen, die in den Imprägniermischungen enthalten sein können, gehören neben den klassischen Azoinitiatoren, wie AIBN bzw. 1,1-Azobiscyclohexancarbonitril, u.a. Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert.-Butylhydroperoxid, Dicumylperoxid, Bis(4-tert.-butylcyclohexyl) peroxydicarbonat, Mischungen aus Keton-Peroxid-Typen, Perester-Typen, Mischungen von zwei oder mehr der vorgenannten Verbindungen miteinander sowie Mischungen der vorgenannten Verbindungen mit nicht genannten Verbindungen, die ebenfalls Radikale bilden können.

Die Imprägniermischungen können des weiteren Antioxidantien, die einzeln oder als Gemische eingesetzt werden können, enthalten. Zu diesen gehören u.a. Amine sowie sterisch gehinderte Phenole.

Als besonders wirksam erwiesen haben sich 2,2'-Methylen-bis-(4-methyl-6-tert.-butylphenol), 1,6-Hexandiol-bis-[3,5-di-tert.-butyl-4-hydroxyphenyl)propionat] (Irganox® 259), Pentaerythrityl-tetrakis-[3-(3,5-di-tert.-butyl-4-hydroxyphenyl)-propionat] ( Irganox® 1010), Diethylenglycol-bis-(3-(3-(tert.-butyl)-4-hydroxy-5-methylphenyl)-propionat) oder Triethylengylkol-bis-(3-(3-(tert.-butyl)-4-hydroxy-5-methylphenyl)-propionat)( Irganox® 245) der Firma Ciby Geigy.

Die Menge der eingesetzten Radikalbildner und/oder Antioxidantien liegt im Bereich von 0,001 bis 5 Gew.-Teilen, vorzugsweise im Bereich von 0,01 bis 3 Gew.-Teilen, bezogen auf das Gesamtgewicht aus den polymerisierbaren Bestandteilen einschließlich der darin gelösten Polymeren (Komponenten A, B und C).

Das Beladen des Holzes oder des holzenthaltenden Werkstoffes kann dabei u.a. beispielsweise so geschehen, daß man ein luftgetrocknetes oder nachgetrocknetes Holz in einem evakuierbaren Füllbad einfach in das Monomere eintaucht und anschließend ein- oder mehrmals Unterdruck erzeugt. In vielen Fällen kann auf diese Weise bereits nach 10 bis 20 Minuten eine hohe Beladung erzielt werden, wobei es für die spätere Polymerisation besonders günstig ist, wenn das Monomere bereits einen gewissen Anteil an Polymeren enthält. Vorzugsweise enthält die Imprägniermischung, je nach Anwendung, zwischen 0 und 30, besonders bevorzugt zwischen 0 und 20 Gew.-% Polymere, bezogen auf das Gesamtgewicht der Monomeren und der hierin löslichen Polymeren.

In Abwandlung von diesem Beladeverfahren kann das Einbringen des Monomeren auch so erfolgen, daß die Luft aus dem Holzwerkstoff zunächst durch Evakuieren möglichst vollständig entfernt wird, wobei ggf. die Luft nach dem Evakuieren durch Stickstoff ersetzt werden kann und nochmals evakuiert wird. Nach dem Zuströmen des Monomeren unter Vakuum oder Normaldruck kann man Überdruck anlegen, um das Eindringen des Monomeren zu begünstigen.

Die Aushärtung der sich im Holzwerkstoff befindlichen Imprägniermischung erfolgt erfindungsgemäß durch Bestrahlung mittels Hochleistungselektronenbeschleuniger mit Elektronenstrahlen einer Energie im Bereich von 0,2 MeV bis 15 MeV, vorzugsweise im Bereich von 0,5 bis 10 MeV. Hochleistungselektronenbeschleuniger, die zur Bestrahlung eingesetzt werden können, sind an sich bekannt und kommerziell erhältlich. Diese liefern heute bereits eine Dosisleistung von über 10⁶ MGy/h. Vorzugsweise wird eine Strahlendosis im Bereich von 1 kGy bis 200 kGy, ganz besonders bevorzugt im Bereich von 10 kGy bis 100 kGy, eingesetzt. Es ist erfindungsgemäß notwendig, daß die Härtung in Gegenwart der oben genannten Radikalbildner und/oder Antioxidantien durchgeführt wird. Die Dauer der Bestrahlung richtet sich nach Art der eingesetzten Monomere, Radikalbildner und/oder Antioxidantien. Sie liegt aber im allgemeinen im Bereich von 0,1 Minuten bis 10 Minuten.

Die erfindungsgemäße Härtung kann ebenfalls unter erhöhten Druck- und Temperaturbedingungen durchgeführt werden. Die Höhe des anzuwendenden Drucks und der anzuwendenden Temperatur richtet sich dabei nach der Art des eingesetzten Monomeren und Polymeren. Im allgemeinen liegt der Druck im Bereich von 0,01 bar bis 10 bar, vorzugsweise im Bereich von 0,8 bar bis 2 bar, während bevorzugte Temperaturbereiche zwischen 20 °C und 100 °C, besonders bevorzugt zwischen 40 °C und 80 °C liegen.

Nach der Bestrahlung wird das Holz oder der Holzwerkstoff für Zeiten im Bereich von 5 Stunden bis 10 Tagen, vorzugsweise 20 Stunden bis 2 Tage bei Temperaturen im Bereich von 20 °C bis 100 °C, insbesondere 40 °C bis 80 °C gelagert. Unter Nachlagerung ist hierbei zu verstehen, daß das bestrahlte Produkt so aufbewahrt wird, daß möglichst wenig Monomer verflüchtigt wird.Erfindungsgemäß verliert das beladene und bestrahlte Holz oder der beladene und bestrahlte Holzwerkstoff weniger als 20 Gew.-%, vorzugsweise weniger als 10 Gew.-% und besonders bevorzugt weniger als 5 Gew.-% der Monomere, bezogen auf die Monomere der Imprägniermischung, die nach der Bestrahlung vorhanden sind, während der Nachlagerung durch Verdampfen.

Dies kann beispielsweise dadurch erfolgen, daß das bestrahlte Produkt in einer Atmosphäre gelagert wird, die mit den Monomeren gesättigt ist.

Des weiteren kann das Holz mit einer Folie umgeben sein, in die das Holz vorteilhaft vor Bestrahlung eingepackt wurde. Als Folie kann jedes Material eingesetzt werden, durch das die Monomeren nur schlecht diffundieren, die Elektronenstrahlung jedoch gut durchdringen kann. Hierzu gehören unter anderem Folien aus Metall, wie beispielsweise Aluminium oder Kunststoff, wie Polyethylen.

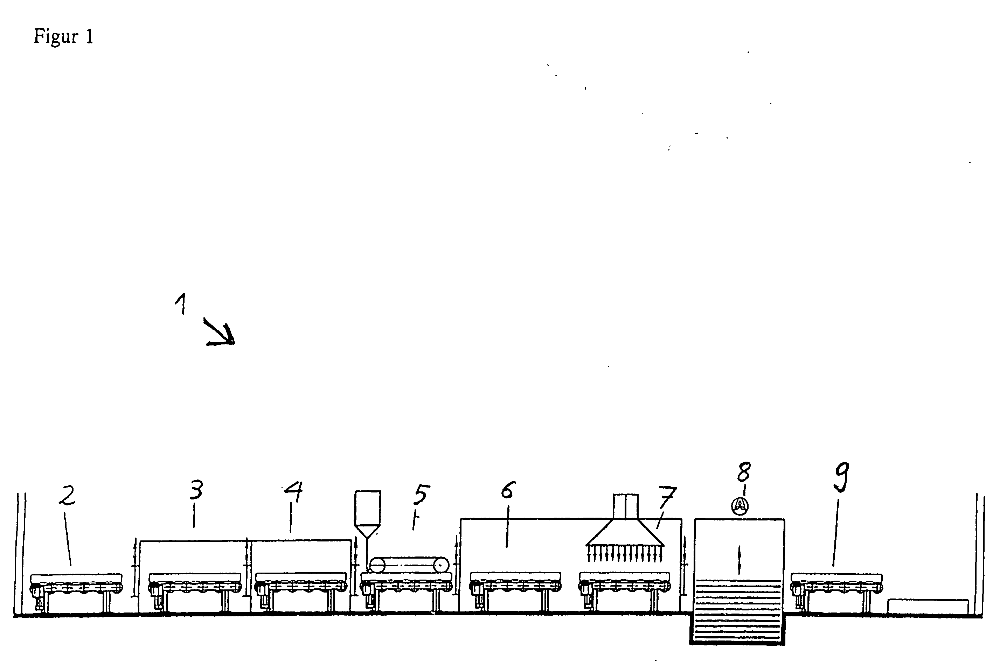

Ein besonderer Vorteil des erfindungsgemäßen Verfahrens liegt darin begründet, daß hierdurch ein kontinuierlicher Prozeß zur Herstellung von Holz-Kunststoffkombinationen möglich wird. Eine schematische Darstellung eines solchen Prozesses ist in Figur 1 dargestellt.

Eine mögliche Anlage (1) zur Herstellung der Holz-Kunststoffkombinationen kann beispielsweise, wie in Figur 1 schematisch dargestellt, folgende Bestandteile aufweisen:
- Auflegevorrichtung (2),
- Konditionierung (3),
- Lagerung (4),
- Imprägnierstation (5),
- Transportstrecke (6),
- Hochleistungselektronenbeschleuniger (7),
- Nachlagerung (8) und
- Abstapelung (9).

In der Auflegevorrichtung (2) wird der Holzwerkstoff oder das Holz in die Anlage (1) eingebracht. Üblicherweise wird das Werkstück, das Holz enthält, zunächst in der Konditionierung (3) vorbehandelt. Hierunter ist unter anderem beispielsweise ein mögliches Trocknen des Werkstücks zu verstehen. Denkbar ist aber auch, daß das Holz chemisch behandelt wird, wie dies in der Holzverarbeitung üblich ist. Es kann somit notwendig sein, daß das Werkstück nach der Konditionierung (3) zunächst in der Lagerung (4) gelagert werden muß, bevor es in der Imprägnierstation (5) mit einer erfindungsgemäßen Imprägniermischung behandelt wird. Die Dauer der Lagerung ist von der Art der Konditionierung abhängig und dem Fachmann bekannt. Nach einer möglichen Lagerung wird das holzhaltige Werkstück mit der polymerisierbaren Imprägniermischung behandelt. Dies geschieht in der Imprägnierstation (5). Nach dem Imprägnieren wird das Werkstück über eine Transportstrecke (6) dem Hochleistungselektronenbeschleuniger (7) zugeführt und bestrahlt, so daß die Imprägniermischung härtet. Danach wird das Werkstück nach der Bestrahlung noch gelagert, wie dies oben beschrieben wurde. Hierfür kann eine Station, die Nachlagerung (8), vorgesehen werden. Nach der letzten Lagerung, kann das fertige Werkstück durch die Abstapelungsvorrichtung (9) entnommen werden.

Weitere Vorteile und Ausführungsformen der Erfindung ergeben sich aus den nachfolgenden Beispielen, die der Illustrierung der Erfindung dienen.

### Beispiel 1 bis 4:

Vollholzproben (Fichte 10 mm, Kiefer Splint 16 mm, Rotbuche 10 mm) und Holzwerkstoffproben (MDF-Platte 16 mm) der Dimension 140 x 70 x 10 bzw. 16 mm wurden in einen Vakuum-Druck-Imprägnierkessel eingebracht, der Kessel verschlossen und eine halbe Stunde Vakuum angelegt, wobei ca. 60 mbar erreicht wurden. In diesem Vakuum wurden die Vollholz- und Holzwerkstoffproben mit dem Imprägniermittel, bestehend aus Methylmethacrylat, das mit 0,5% Azoinitiator A versetzt war, geflutet. Danach wurde mit reinem Stickstoff ein Druck von 5 bar eine Stunde lang angelegt. Nach Druckentlastung und Öffnen des Kessels wurden die imprägnierten Holzstücke einzelnen in Aluminiumfolie und danach einzeln in Polyethylenfolie verpackt, um ein Verdampfen des Imprägnierungsmittels zu verhindern. Die so verpackten Proben wurden mit 10 MeV-Elektronen aus einem Hochleistungselektronenbeschleuniger mit einer nominalen Leistung von 15 kW bestrahlt. Die Strahlendosis betrug 50 kGy.

Nach erfolgter Bestrahlung wurden die Proben im verpackten Zustand über Nacht bei ca. 50 °C nachgelagert und erst am nächsten Morgen, etwa 20 Stunden nach der Bestrahlung, ausgepackt und frei bei Raumtemperatur weiter gelagert. Nach siebentägiger offener Lagerung und abschließendem einstündigen Evakuieren (ca. 60 mbar) wurde durch Wägen der im Holz verbliebene Anteil des Imprägniermittels bestimmt. Die Ergebnisse sind in Tabelle 1 zusammengefaßt.

**Tabelle 1:**

| | Holzart | Stärke | Anteil verbliebenes Imprägniermittel |
|---|---|---|---|
| Beispiel 1 | Rotbuche | 10 mm | 98,8 % |
| Beispiel 2 | Fichte | 10 mm | 100,0 % |
| Beispiel 3 | Kiefer Splint | 16 mm | 94,1 % |
| Beispiel 4 | MDF-Platte | 16 mm | 87,1 % |

### Beispiele 5 bis 9:

Vollholzproben (Fichte, Kiefer Splint, Rotbuche) und Holzwerkstoffproben (Spanplatte, MDF-Platte) der Dimension 140 x 70 x 16 mm wurden wie in Beispiel 1 behandelt. Ein Unterschied gegenüber Beispiel 1 bestand in der Bestrahlung. Es wurde wiederum eine Elektronenstrahlung mit 10 MeV eingesetzt, wobei die Strahlendosis von 50 kGy aber in zwei Teilschritten von je 25 kGy aufgebracht wurde. Zwischen diesen Teilschritten lag ein Zeitraum von etwa 5 Minuten. Die durch Bestimmung des im Holz bzw. Holzwerkstoff verbliebenen Anteils an Imprägniermittel erhaltenen Ergebnisse sind in Tabelle 2 aufgeführt.

**Tabelle 2:**

| | Holzart | Abmessung [mm] | Anteil verbliebenes Imprägniermittel |
|---|---|---|---|
| Beispiel 5 | Rotbuche | 140 x 70 x 16 | 96,0 % |
| Beispiel 6 | Fichte | 140 x 70 x 16 | 100,0 % |
| Beispiel 7 | Kiefer Splint | 140 x 70 x 16 | 97,2 % |
| Beispiel 8 | MDF-Platte | 140 x 70 x 16 | 94,3 % |
| Beispiel 9 | Spanplatte | 140 x 70 x 16 | 98,4 % |

### Vergleichsbeispiele 1 und 2:

Vollholzproben (Fichte, Kiefer Splint) der Dimension 140 x 70 x 16 mm wurden wie in Beispiel 1 behandelt. Der Unterschied gegenüber Beispiel 1 bestand darin, daß die Mischung keinen Azoinitiator A enthält. Die durch Bestimmung des im Holz bzw. Holzwerkstoff verbliebenen Anteils an Imprägniermittel erhaltenen Ergebnisse sind in Tabelle 3 aufgeführt.

**Tabelle 3:**

| | Holzart | Abmessung [mm] | Anteil verbliebenes Imprägniermittel |
|---|---|---|---|
| Vgl.-Bsp. 1 | Fichte | 140 x 70 x 16 | 88,0 % |
| Vgl.-Bsp. 2 | Kiefer Splint | 140 x 70 x 16 | 72,2 % |

### Vergleichsbeispiele 3, 4 und 5:

Vollholzproben (Fichte, Buche) und eine Faserplatte der Dimension 140 x 70 x 16 mm wurden wie in Beispiel 1 behandelt. Der Unterschied gegenüber Beispiel 1 bestand darin, daß zur Härtung keine Elektronenstrahlung eingesetzt wurde, sondern daß die Härtung thermisch erfolgte. Hierfür wurde Mikrowellenstrahlung verwendet, wobei die innere Temperatur der Holzproben kontrolliert wurde. Diese betrug ca. 80 ± 10 °C. Die durch Bestimmung des im Holz bzw. Holzwerkstoff verbliebenen Anteils an Imprägniermittel erhaltenen Ergebnisse sind in Tabelle 4 aufgeführt.

**Tabelle 4:**

| | Holzart | Abmessung [mm] | Anteil verbliebenes Imprägniermittel |
|---|---|---|---|
| Vgl.-Bsp. 3 | Fichte | 140 x 70 x 16 | 32,0 % |
| Vgl.-Bsp. 4 | Buche | 140 x 70 x 16 | 33,8 % |
| Vgl.-Bsp. 5 | Faserplatte | 140 x 70 x 16 | 39,1 % |

### Vergleichsbeispiele 6, 7 und 8:

Vollholzproben (Fichte, Buche) und eine Faserplatte der Dimension 140 x 70 x 16 mm wurden wie in Beispiel 1 behandelt. Der Unterschied gegenüber Beispiel 1 bestand darin, daß die Proben nicht in verpacktem Zustand nachgelagert wurden, sondern direkt nach dem Bestrahlen ausgepackt wurden und die Gewichtsabnahme durch einstündiges Lagern im Vakuum bestimmt wurde. Die durch Bestimmung des im Holz bzw. Holzwerkstoff verbliebenen Anteils an Imprägniermittel erhaltenen Ergebnisse sind in Tabelle 5 aufgeführt.

**Tabelle 5:**

| | Holzart | Abmessung [mm] | Anteil verbliebenes Imprägniermittel |
|---|---|---|---|
| Vgl.-Bsp. 6 | Fichte | 140 x 70 x 16 | 30,3 % |
| Vgl.-Bsp. 7 | Buche | 140 x 70 x 16 | 35,7 % |
| Vgl.-Bsp. 8 | Faserplatte | 140 x 70 x 16 | 39,1 % |

Die Vergleichsbeispiele zeigen recht deutlich den durch das erfindungsgemäße Verfahren erzielbaren Fortschritt. Durch das Verwenden von Radikalbildnern und/oder Antioxidantien in Kombination mit Nachlagern der bestrahlten Proben werden problemlos Umsätze größer als 95 % erhalten. Ohne Nachlagerung verbleibt weniger als 40% im Holz. Dies deutet daraufhin, daß nach der Bestrahlung ein Großteil der Monomeren durch vorhandene Radikale polymerisiert und erst nach einer gewissen Zeit Holz-Kunststoffkombinationen erhalten werden, die wenig oder kein Monomer freisetzen, wobei diese Werkstoffe hervorragende Eigenschaften, wie hohe Abriebfestigkeit, Belastbarkeit, Witterungsbeständigkeit, Kratzfestigkeit, Pilzbeständikeit, Quellfestigkeit und Härte haben.

## Patentansprüche

1. Verfahren zur Herstellung von Holz-Kunststoffkombinationen, bei dem Holz oder ein Holz enthaltender Werkstoff mit einer polymerisierbare Bestandteile enthaltenden Imprägniermischung zur Benetzung wenigstens eines Teils des Holzes oder Holzwerkstoffs in Kontakt gebracht wird, wobei das Holz oder der Holzwerkstoff mit der Imprägniermischung beladen wird, und man anschliessend die Polymerisation (Härtung) der Imprägniermischung in Gegenwart von Radikalbildnern und/oder Antioxidantien durch Bestrahlung mittels Hochleistungselektronenschleuniger mit Elektronenstrahlen einer Energie im Bereich von 0,2 MeV bis 15 MeV bewirkt, **dadurch gekennzeichnet, dass** man als Imprägniermischung ein (Meth)acrylathaltiges Harz mit der Zusammensetzung
| | |
|---|---|
| (Meth)acrylat (A) | 50 - 100 Gew.-%, |
| Comonomere (B) | 0 - 50 Gew.-%, |
| in (A) oder (B) lösliche Polymere (C) | 0 - 50 Gew.-% |
| und bezogen auf 100 Teile der oben genannten Komponenten Radikalbildner und/oder Antioxidantien | 0,001 - 5 Gew.-Teile |
| sowie weitere übliche Verarbeitungshilfsmittel | 0 - 20 Gew.-Teile |
einsetzt und man das bestrahlte Holz oder den bestrahlten Holzwerkstoff für Zeiten im Bereich von 5 Stunden bis 10 Tagen bei Temperaturen im Bereich von 20 °C und 100 °C nachlagert, wobei das beladene und bestrahlte Holz oder der beladene und bestrahlte Holzwerkstoff während der Nachlagerung durch Verdampfen weniger als 20 Gew.-% der Monomere verliert, bezogen auf die Monomere der Imprägniermischung, die nach dem Bestrahlen vorhanden sind.

2. Verfahren nach Anspruch 1,
**dadurch gekennzeichnet,**
**dass** man das bestrahlte Holz oder den bestrahlten Holzwerkstoff für Zeiten im Bereich von 20 Stunden bis 2 Tagen bei Temperaturen im Bereich von 40 °C und 80 °C nachlagert.

3. Verfahren nach Anspruch 1 oder 2,
**dadurch gekennzeichnet,**
**dass** man das beladene Holz oder den beladenen Holzwerkstoff vor der Bestrahlung in eine Folie verpackt.

4. Verfahren nach einem oder mehreren der vorhergehenden Ansprüche,
**dadurch gekennzeichnet,**
**dass** die Imprägniermischung mindestens 70 Gew.-%, insbesondere mindestens 80 Gew.-% (Meth)acrylat, bezogen auf das Gesamtgewicht der Monomeren und der darin löslichen Polymeren enthält.

5. Verfahren nach einem oder mehreren der vorhergehenden Ansprüche,
**dadurch gekennzeichnet,**
**dass** als Radikalbildner Peroxide oder Azo-Verbindungen und als Antioxidantien sterisch gehinderte Phenole oder Amine eingesetzt werden.

6. Verfahren nach einem oder mehreren der vorhergehenden Ansprüche,
**dadurch gekennzeichnet,**
**dass** der Anteil der Radikalbildner und/oder Antioxidantien 0,01 bis 3 Gew.-Teile, bezogen auf das Gesamtgewicht der Monomeren und der darin löslichen Polymere, beträgt.

7. Verfahren nach einem oder mehreren der vorhergehenden Ansprüche,
**dadurch gekennzeichnet,**
**dass** man das beladene Holz oder den beladenen Holzwerkstoff mit einer Strahlendosis im Bereich von 1 kGy bis 200 kGy behandelt.

8. Verfahren nach einem oder mehreren der vorhergehenden Ansprüche,
**dadurch gekennzeichnet,**
**dass** man das beladene Holz oder den beladenen Holzwerkstoff mit Elektronenstrahlen aus einem Hochleistungselektronenbeschleuniger, welcher eine Energie im Bereich von 0,2 MeV bis 15 MeV aufweist, mit einer Strahlendosis im Bereich von 10 kGy bis 100 kGy härtet.

9. Verfahren nach einem oder mehreren der vorhergehenden Ansprüche,
**dadurch gekennzeichnet,**
**dass** man die Härtung bei Drücken von 0,8 bar bis 2 bar ausführt.

10. Verfahren nach einem oder mehreren der vorhergehenden Ansprüche,
**dadurch gekennzeichnet,**
**dass** man die Härtung bei Temperaturen im Bereich von 40 °C bis 80 °C ausführt.

11. Verfahren nach einem oder mehreren der vorhergehenden Ansprüche,
**dadurch gekennzeichnet,**
**dass** man als Holz oder Holzwerkstoff Vollholz, Spanplatten, Faserplatten, Furniere, Sägemehl, cellulosehaltiges Material einsetzt.

## Claims

1. A method for the production of wood-plastic combinations, in which wood or a material containing wood is brought into contact with an impregnating mixture containing polymerisable constituents for the purpose of wetting at least a part of the wood or wood material, whereby the wood or the wood material is loaded with the impregnating mixture, and the polymerisation (hardening) of the impregnating mixture is then brought about in the presence of radical formers and/or antioxidant agents by irradiation by means of a high-power electron accelerator with electron beams having an energy in the range from 0.2 MeV to 15 MeV, **characterised in that** a (meth)acrylate-containing resin with the composition
| | |
|---|---|
| (meth)acrylate (A) | 50 - 100 wt.%, |
| comonomers (B) | 0 - 50 wt.%, |
| polymers (C) soluble in (A) or (B) and, related to 100 parts of the aforementioned constituents, | 0 - 50 wt.%, |
| radical formers and/or antioxidants as well as further standard | 0.001 - 5 parts by weight |
| processing aids | 0 - 20 parts by weight |
is used as the impregnating mixture and the irradiated wood or the irradiated wood material is subsequently stored for periods in the range from 5 hours to 10 days at temperatures in the range from 20°C and 100°C, whereby the loaded and irradiated wood or the loaded and irradiated wood material loses less than 20 wt.% of the monomers through evaporation during the subsequent storage, related to the monomers of the impregnating mixture that are present after the irradiation.

2. The method according to claim 1,
**characterised in that**
the irradiated wood or the irradiated wood material is subsequently stored for periods in the range from 20 hours to 2 days at temperatures in the range from 40°C and 80°C.

3. The method according to claim 1 or 2,
**characterised in that**
the loaded wood or the loaded wood material is packaged in a film prior to the irradiation.

4. The method according to one or more of the preceding claims,
**characterised in that**
the impregnating mixture contains at least 70 wt.%, in particular at least 80 wt.% (meth)acrylate, related to the total weight of the monomers and the polymers soluble therein.

5. The method according to one or more of the preceding claims,
**characterised in that**
peroxides or azo-compounds are used as radical formers and sterically hindered phenols or amines are used as antioxidant agents.

6. The method according to one or more of the preceding claims,
**characterised in that**
the share of radical formers and/or antioxidant agents amounts to 0.01 to 3 parts by weight, related to the total weight of the monomers and the polymers soluble therein.

7. The method according to one or more of the preceding claims,
**characterised in that**
the loaded wood or the loaded wood material is treated with a radiation dose in the range from 1 kGy to 200 kGy.

8. The method according to one or more of the preceding claims,
**characterised in that**
the loaded wood or the loaded wood material is hardened with electron beams from a high-power electron accelerator, which has an energy in the range from 0.2 MeV to 15 MeV, with a radiation dose in the range from 10 kGy to 100 kGy.

9. The method according to one or more of the preceding claims,
**characterised in that**
the hardening is carried out at pressures from 0.8 bar to 2 bar.

10. The method according to one or more of the preceding claims,
**characterised in that**
the hardening is carried out at temperatures in the range from 40°C to 80°C.

11. The method according to one or more of the preceding claims,
**characterised in that**
solid wood, chipboards, fibreboards, veneers, saw dust, cellulose-containing material is used as the wood or wood material.

## Revendications

1. Procédé de production de combinaisons bois-matière plastique, dans lequel on met du bois ou un matériau contenant du bois en contact avec un mélange d'imprégnation contenant des composants polymérisables pour mouiller au moins une partie du bois ou du matériau dérivé du bois, si bien que le bois ou le matériau dérivé du bois est chargé avec le mélange d'imprégnation, et dans lequel on induit ensuite la polymérisation (durcissement) du mélange d'imprégnation en présence de précurseurs de radicaux libres et/ou d'anti-oxydants, au moyen d'une irradiation à l'aide d'un accélérateur d'électrons à haute énergie avec un rayonnement électronique d'une énergie de 0,2 MeV à 15 MeV, **caractérisé en ce que** l'on met en oeuvre, en tant que mélange d'imprégnation, une résine contenant du (méth)acrylate ayant la composition suivante :
| | |
|---|---|
| (méth)acrylate (A) | 50% à 100% en poids |
| comonomères (B) | 0% à 50% en poids |
| polymères (C) solubles dans (A) ou dans (B) | 0% à 50% en poids |
| et, par rapport à 100 parties des composants ci-dessus, précurseurs de radicaux libres et/ou anti-oxydants | 0,001 à 5 parties en poids |
| et d'autres adjuvants habituels | 0 à 20 parties en poids |
et **en ce que** l'on entrepose ensuite le bois irradié ou le matériau dérivé du bois irradié pendant une durée de 5 heures à 10 jours à des températures allant de 20°C à 100°C, si bien que le bois chargé et irradié ou le matériau dérivé du bois chargé et irradié perd moins de 20% en poids des monomères par évaporation pendant l'entreposage ultérieur par rapport aux monomères du mélange d'imprégnation présents après l'irradiation.

2. Procédé selon la revendication 1, **caractérisé en ce que** l'on entrepose le bois irradié ou le matériau dérivé du bois irradié pendant une durée de 20 heures à 2 jours à des températures allant de 40°C à 80°C.

3. Procédé selon la revendication 1 ou 2, **caractérisé en ce qu'**avant l'irradiation, on enveloppe le bois chargé ou le matériau dérivé du bois chargé dans un film.

4. Procédé selon l'une quelconque ou plusieurs des revendications précédentes, **caractérisé en ce que** le mélange d'imprégnation contient au moins 70% en poids, en particulier au moins 80% en poids de (méth)acrylate par rapport au poids total des monomères et des polymères solubles dans ces monomères.

5. Procédé selon l'une quelconque ou plusieurs des revendications précédentes, **caractérisé en ce que** l'on met en oeuvre, en tant que précurseurs de radicaux libres, des peroxydes ou des composés azoïques et, en tant qu'anti-oxydants, des phénols ou des amines à encombrement stérique.

6. Procédé selon l'une quelconque ou plusieurs des revendications précédentes, **caractérisé en ce que** la proportion de précurseurs de radicaux libres et/ou d'anti-oxydants est de 0,01 à 3 parties en poids par rapport au poids total des monomères et des polymères solubles dans ces monomères.

7. Procédé selon l'une quelconque ou plusieurs des revendications précédentes, **caractérisé en ce que** l'on traite le bois chargé ou le matériau de bois chargé avec une dose d'irradiation allant de 1 kGy à 200 kGy.

8. Procédé selon l'une quelconque ou plusieurs des revendications précédentes, **caractérisé en ce que** l'on durcit le bois chargé ou le matériau de bois chargé avec un rayonnement électronique émis par un accélérateur d'électrons à haute énergie, lequel présente une énergie allant de 0,2 MeV à 15 MeV, avec une dose d'irradiation allant de 10 kGy à 100 kGy.

9. Procédé selon l'une quelconque ou plusieurs des revendications précédentes, **caractérisé en ce que** l'on réalise le durcissement sous des pressions de 0,8 bar à 2 bars.

10. Procédé selon l'une quelconque ou plusieurs des revendications précédentes, **caractérisé en ce que** l'on réalise le durcissement à des températures allant de 40°C à 80°C.

11. Procédé selon l'une quelconque ou plusieurs des revendications précédentes, **caractérisé en ce que** l'on met en oeuvre, en tant que bois ou de matériau dérivé du bois, du bois massif, des panneaux de particules, des panneaux de fibres, des feuilles de placage, de la sciure de bois, une matière cellulosique.
